# EUROPEAN PATENT SPECIFICATION

(11) **EP 2 673 543 B1**
(45) Date of publication and mention of the grant of the patent: **27.05.2015**
(21) Application number: 11710575.9
(22) Date of filing: 08.02.2011
(51) Int. Cl.: F16L 37/133, F16L 37/14

(54) **COUPLING DEVICE**
KOPPLUNGSVORRICHTUNG
DISPOSITIF D'ACCOUPLEMENT

(43) Date of publication of application: 18.12.2013
(73) Proprietor: Emer S.p.a., 25135 Brescia (IT)
(72) Inventor: DEFILIPPI, Roberto, I-10155 Torino (IT); NOVENTA, Francesco, I-25082 Botticino Brescia (IT)
(74) Representative: Chimini, Francesco
(86) International application number: PCT/IT2011/000032
(87) International publication number: WO 2012/107941

(56) References cited:
- EP-A1- 0 317 249
- EP-A2- 1 154 190
- WO-A1-03/029716
- FR-A1- 2 666 134

## Description

### Field of the invention

The present invention relates to a coupling device of a pipe, in particular for the connection of pipes in automotive gas systems. In particular, the solution proposed here finds its application in the part of the system characterised by high gas pressure.

The application to vehicles of conversion systems enabling fuelling of the same engine by liquefied petrol or methane gas (CNG) thereby enabling a mixed fuel system has been known of for some time. The systems of the known type are generally composed of a gas tank, a pressure regulator which brings the gas to the right pressure for fuelling the engine, and a series of ducts and relative accessories.

The coupling device which the present invention relates to can be used to join pipes and to connect pipes to accessories and valve devices of the system, from the gas-loading device to the gas pressure reducer device.

### State of the art

The use of connections, junctions and couplings is essential in automotive gas systems for joining the pipes to the devices heeded to ensure easy loading of the tank and optimal functioning of the system.

Currently, pipe-pipe, pipe-device and pipe-accessory connections in automotive gas systems are made using threaded couplings with sealing systems of various types. Threaded coupling, although ensuring the desired performance, take longer to attach and require the use of dedicated tools, such as spanners. The same considerations apply to dismantling, needed in the case of system.maintenance.

Quick-fit coupling devices comprising a device body in which a hole is made which extends from an end aperture of such body to receive a pipe and a collar positioned inside said hole and having flexible arms suitable to co-operate with a cam surface made in the device body are already known of. Said cam surface engages said flexible arms so that these are forced inwards, blocking the pipe when an attempt is made to extract the pipe from the body of the coupling device.

Such devices however are not suitable for use in automotive gas systems where pipes having an outer diameter of 6 mm are often used, in that they do not offer sufficient guarantees against uncoupling of the pipe as a result of accidental impact or improper maintenance, or protection from external agents, or the certainty that the pipe is perfectly coupled before use of the system. A coupling device according to the preamble of claim 1 is disclosed in document FR2666134A1.

### Scope of the invention

The object of the invention is to realise a coupling device of the type with collar, so as to overcome the need for threading, easy and fast to use to connect and disconnect the piping and to offer the same guarantees as a traditional coupling in terms of operating pressure, tightness, bursting pressure. The device must guarantee the required level of safety for operating with high pressure gas (<260 bar). The connection must also be such as to enable the attachment of a metal pipe having an outer diameter of 6 mm.

A further object of the invention is to make a safe connection in order to prevent undesired and unexpected disconnections of the pipe, and a system which signals any improper connection.

### Brief description of the drawings

The invention will be easier to comprehend from the following description of one embodiment thereof, given purely by way of example. In such description reference will be made to the enclosed drawings, wherein:
Figure 1 shows a diagram of an automotive gas system;

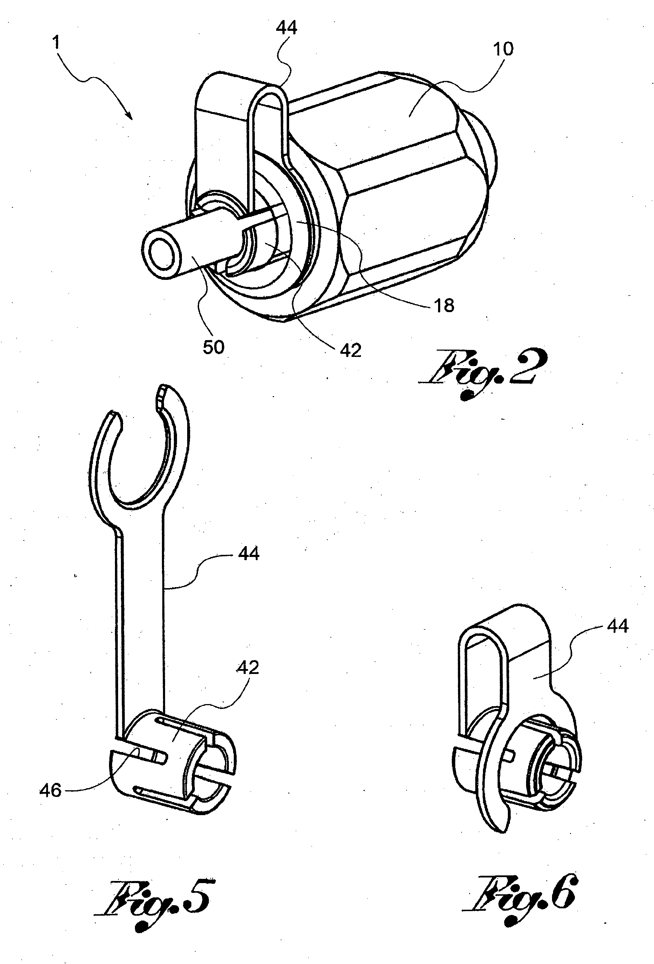

Figure 2 shows a perspective view of the coupling device according to the invention, with a portion of pipe inserted therein;
Figure 3 is an axial cross-section of the coupling device with the pipe attached;
Figure 3a is an exploded view, in axial cross-section, of the coupling device and of the portion of pipe;
Figure 4 is a transversal cross-section of the coupling device;
Figure 5 shows a perspective view of a safety device of the coupling device;
Figure 6 shows the safety device with the safety fork bent into the active position;

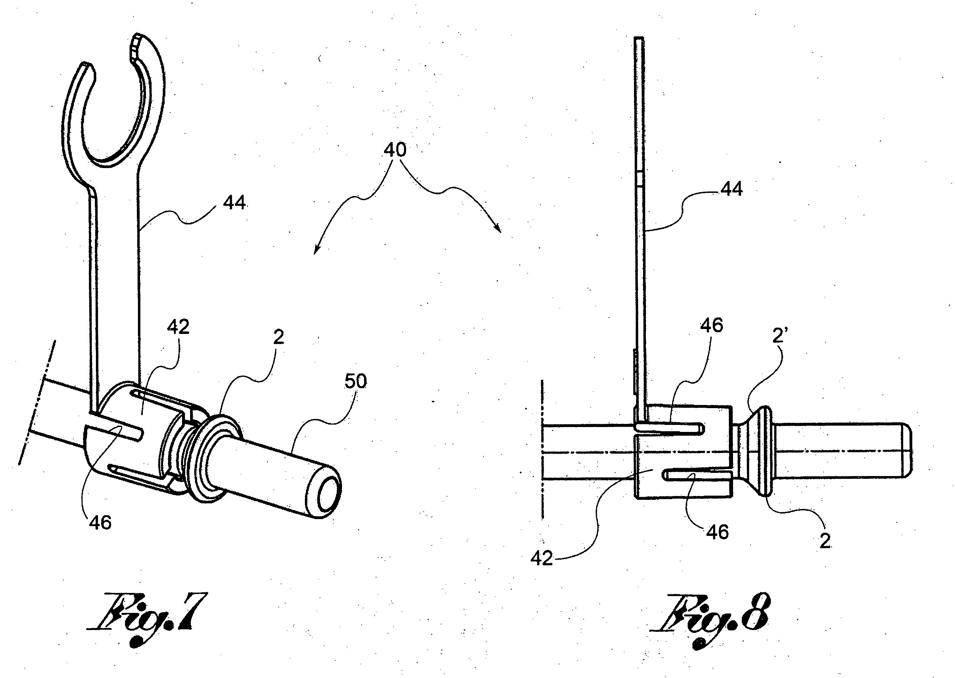

Figures 7 and 8 show, in a perspective and side view, the safety device fitted into a pipe to be connected to the coupling device;
Figure 9 shows a safety device in one embodiment variation.

### Detailed description of the invention

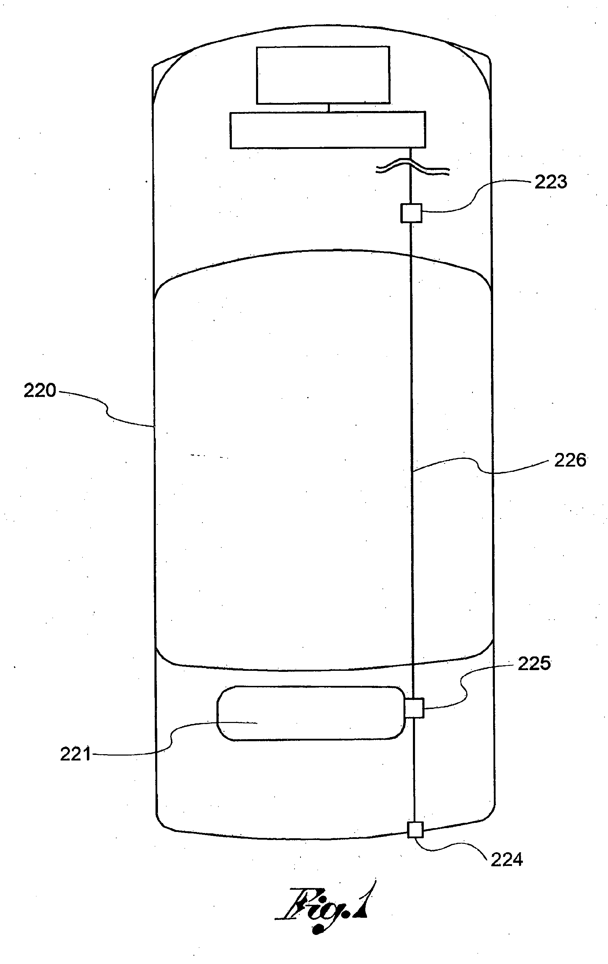

The coupling device according to the invention is particularly advantageous to apply to an automotive gas system of a vehicle 220, represented schematically in figure 1. In particular the coupling device can be used to connect two pipes to each other or one pipe to a device of the system, in the part of the system where there is a flow of high pressure gas, which for example comprises a loading device 224, a high pressure gas tank with relative control unit 225, a pipe 226 and a pressure regulation device 223.

The coupling device 1 comprises a device body 10 in which a hole 12 is made which extends from an end aperture 14 of said body to receive a terminal portion 50 of a pipe. Later in the description the terms "front or forward" and "back or rearward" refer to the direction of insertion of the terminal portion 50 of the pipe in the coupling device.

A collar 16 is positioned partially inside the hole 12 with the possibility of axial traction between a rearward, blocked position of the pipe and a forward position enabling release of the pipe. The collar 16 has an annular flange 18, outside said end aperture 14, and flexible arms 20 which extend from the annular flange 18 inside the hole 12. The flexible arms 20 are suitable to co-operate with a cam surface 22 made in the device body 10. Such cam surface 22 comprises an inner conical portion 22' in an axial direction suitable to engage said flexible arms 20 so that these are forced inwards following their axial movement in a rearward direction. The distal end 24 of each flexible arm 20 has on its inner side a radial projection 25 suitable to engage the annular projection 2 of the pipe.

In a preferred embodiment, the annular projection 2 of the pipe defines, on the side facing the end aperture 14 of the device body, a conical surface 2' able to act as a cam to force the flexible arms 20 outwards following the axial shifting of the collar towards the device body, that is, in a forward position.

In one embodiment, the coupling device 1 further comprises, positioned inside the hole 12 so as to be fitted onto the end portion 50 of the pipe, at least one annular sealing gasket 26, preferably two separated by a spacer 26', and a bush 28 having a flanged head 28' which the annular projection 2 of the pipe rests on.

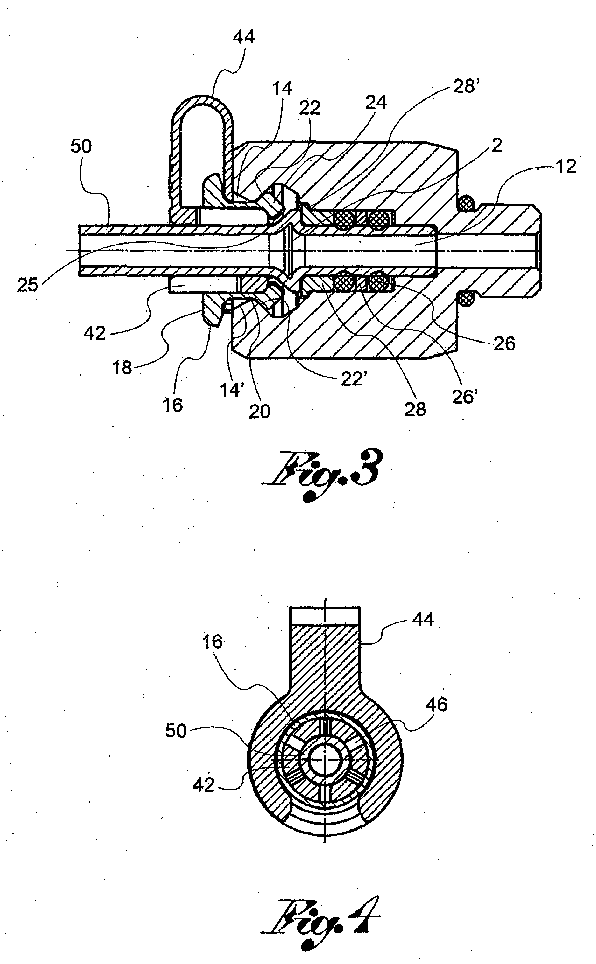

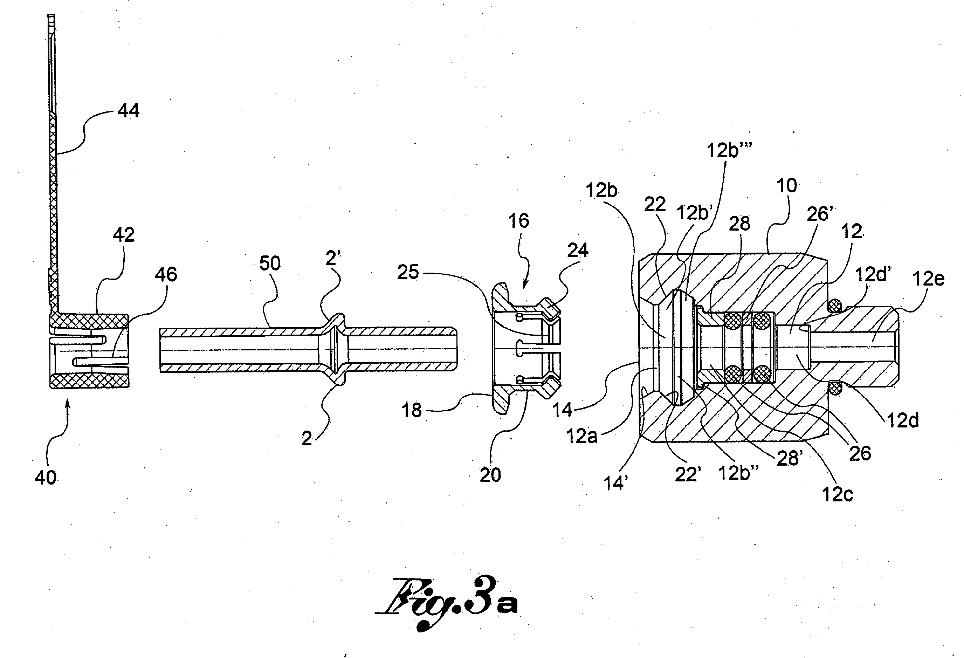

More specifically (Figure 3a), the hole 12 in the device body 10 comprises, starting from the open end 14 of said body, a first portion 12a having a diameter barely greater than that of the collar 16 at the point of the flexible arms 20 in a rest position" a second portion 12b having an initial divergent section 12b' which defines the cam surface 22 of the device body, an intermediate section 12b" substantially cylindrical in diameter such as to allow the radial spreading of the flexible arms 20, and a final convergent section 12b"', a third cylindrical portion 12c having a diameter such as to house the bush 28 and the annular sealing gasket 26, a fourth portion 12d having a diameter barely greater than that of the pipe and ending with an annular abutment plane 12d' for the end of said pipe, and a fifth portion 12e having a diameter substantially equal to the inner diameter of the pipe.

Moreover, advantageously, the end aperture 14 of the device body 10 is delimited by a flared surface 14' acting as a guide for the insertion of the flexible arms 20 of the collar 16 in the hole 12 of the device body.

The coupling device 1further comprises a safety device 40 suitable to prevent the accidental shifting of the collar in the forward direction, with the consequent risk of release of the pipe. To such purpose, the safety device 40 comprises a cylindrical portion 42 suitable to be fitted on the portion of pipe straddling the end aperture 14 so as to position itself between the pipe and the collar 16 and a safety fork 44 connected to said cylindrical portion and suitable to embrace the collar 16 positioning itself between the device body 10 and the annular flange 18 of said collar 16.

According to one embodiment, the cylindrical portion 42 of the safety device 40 has a plurality of longitudinal slits 46 which, alternately, extend from one end of said cylindrical portion towards the opposite end, so as to give said cylindrical portion such elasticity as to be fitted onto the pipe from the free end of the pipe, passing over the annular projection 2.

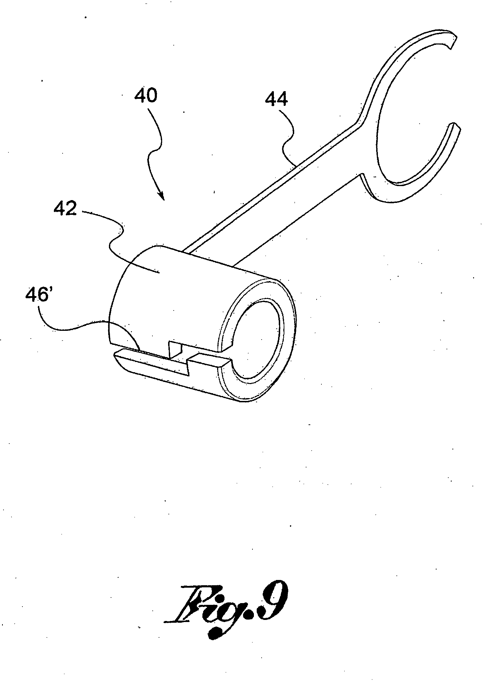

In an embodiment variation shown in figure 9, the cylindrical portion 42 of the safety device has a single longitudinal slit 46' all along its length which enables said cylindrical portion to be elastically widened to be fitted onto the portion of pipe 50. Preferably, said longitudinal slit 46', has a stepped profile which prevents external agents from penetrating inside the coupling device through said slit.

Preferably, the safety device 40 is made from a thermoplastic polymer, such as homopolymer propylene.

As mentioned above, the coupling device according to the invention is particularly suitable for connecting a pipe which an automotive gas flows through, having an outer diameter typically of 6 mm± 0.3 mm. Consequently, the cylindrical portion 42 of the safety device 40 has an inner diameter such as to be closely fitted onto a pipe having such outer diameter of 6 mm± 0.3 mm.

Since the collar 16 is positioned above the cylindrical portion 42 of the safety device 40, for the flexible arms 20 to co-operate correctly with the annular projection 2, said annular projection 2 needs to be radially sized so as to bear in mind the thickness of the cylindrical portion 42. For example, the annular projection 2 has a diameter of 6.5 mm to 12 mm, preferably about 10 mm. According to one embodiment, the annular projection 2 of the pipe is obtained by bending the pipe itself.

Inserting the end portion 50 of the pipe in the hole 12 of the device body with a slight pressure therefore, thanks to the interaction of the annular projection 2 of the pipe and the distal end 24 of the flexible arms, the radial expansion of these is caused until said annular projection 2 passes over the flexible arms and abuts against the flanged head 28' of the bush 28. The flexible arms 20 then return to a rest position.

At this point, it is possible to insert the safety fork 44 betwen the flange 18 of the collar 16 and the device body 1.

An axial shift of the pipe in a rearward direction causes the interaction of the conical surface 2' of the annular projection 2 and the distal end 24 of the flexible arms 20. Following such interaction, the distal end 24 of the flexible arms 20 is engaged in turn by the inclined surface 22' of the cam 22 of the device body 1 and therefore tends to flex radially inwards, blocking the pipe.

To extract the pipe from the coupling device, the safety fork 44 must be removed from the collar 16 so as to allow the axial shifting of this to a forward position. In fact by pressing the collar 16 forwards and contemporarily pulling the pipe backwards, the distal ends 24 of the flexible arms 20 are made to slide along the conical surface 2' of the annular projection 2. The flexible arms widen radially until the annular projection. 2 is able to pass through them thereby freeing the pipe from:the collar.

It is worth noting that the safety device 40 also performs its function at the moment of installing the pipe, not just to prevent accidental release: in fact, if there is not enough space between the collar 16 and the device body 10 for attachment of the safety fork 44, this means that the pipe has not been fully inserted in the device and therefore needs to be refitted.

The cylindrical portion 42 of the safety device 40 advantageously has various functions:

- It ensures that vibrations between the pipe and coupling device are damped, in particular betwen the pipe and the internal sealing gaskets which could suffer deterioration on account of such vibrations (especially in the preferred application of the device in a vehicle);

- It protects the coupling device from the intrusion of dirt, water, salt or ice, in particular for applications under the vehicle body and therefore exposed to such agents;

- It allows the safety fork to remain permanently connected to the pipe,

- It acts as an adaptor to ensure, even after prolonged use, a more stable position, a reduction of the vibrations, a protection of the coupling device from external agents, and therefore improved reliability of the device over time, even using 6 mm pipes typical of the gas system sector (especially methane gas), where the operating pressures in play are approximately 220 bar, associated with a collar already available in various applications for the blockage of pipes of greater dimensions (typically of 8 mm).

## Claims

1. Coupling device (1) of a pipe, comprising a device body (10) in which a hole (12) is made which extends from an end aperture (14) of said body to receive a pipe, a collar (16) positioned partially inside said hole with the possibility of axial translation and having an annular flange (18) outside said end aperture (14) and flexible arms (20) which extend inside said hole (12), said arms being suitable to co-operate with a cam surface (22) made in the device body (10), said cam surface comprising an inner conical portion (22') in an axial direction suitable to engage said flexible arms (20) so that these are forced inwards by the axial movement in said direction, the distal end (24) of each arm (20) having on its inner side a radial projection (25) suitable to engage an annular projection (2) of the pipe, the coupling device (1) further comprising a safety device (40) comprising a safety fork (44) suitable to embrace the collar (16) positioning itself between the device body (10) and the annular flange (18) of said collar to prevent axial shifting of the collar (16) towards the device body;
said coupling device (1) being **characterized in** a safety device (40) comprising a cylindrical portion (42) suitable to be fitted on the portion of pipe straddling the end aperture (14) so as to position itself between the pipe and the collar, the safety fork (44) being connected to said cylindrical portion.

2. Device according to claim 1, wherein the annular projection (2) of the pipe defines, on the side facing the end aperture (14) of the device body (10), a conical surface (2') able to act as a cam to force the flexible arms (20) outwards following the axial shifting of the collar (16) towards the device body (10).

3. Device according to claim 1 or 2, wherein the cylindrical portion (42) of the safety device (40) has an inner diameter such as to be closely fitted onto a pipe having a diameter of 6 mm ± 0.3 mm.

4. Device according to any of the previous claims, wherein the cylindrical portion (42) of the safety device (40) has a plurality of longitudinal slits (46) which, alternately, extend from one end of said cylindrical portion towards the opposite end, so as to give said cylindrical portion (42) such elasticity as to be fitted onto the pipe from the free end of the pipe, passing over the annular projection (2).

5. Device according to any of the claims 1-3, wherein the cylindrical portion (42) of the safety device (40) has a single longitudinal slit (46') all along its length which enables said cylindrical portion to be elastically widened to be fitted on the pipe.

6. Device according to any of the previous claims, further comprising, positioned inside the hole (12) in the device body (10) so as to be fitted onto the end portion of the pipe, at least one annular sealing gasket (26) and a bush (28) having a flanged head (28') which the annular projection (2) of the pipe rests on.

7. Device according to the previous claim, wherein the hole (12) in the device body (10) comprises, starting from the open end (14) of said body, a first portion (12a) having a diameter barely greater than that of the collar (16) at the point of the flexible arms (20) in a rest position, a second portion (12b) having an initial divergent section (12b') which defines the cam surface (22) of the device body (10), an intermediate section (12b") substantially cylindrical in diameter such as to allow the radial spreading out of the flexible arms (20), and a final convergent section (12b"'), a third cylindrical portion (12c) having a diameter such as to house the bush (28) and the annular sealing gasket (26), a fourth portion (12d) having a diameter barely greater than that of the pipe and ending with an annular abutment plane (12d') for the end of said pipe, and a fifth portion (12e) having a diameter substantially equal to the inner diameter of the pipe.

8. Device according to the previous claim, wherein the end aperture (14) of the device body (10) is delimited by a flared surface (14') acting as a guide for the insertion of the flexible arms (20) of the collar (16) in the hole (12) of the device body (10).

9. Device according to any of the previous claims, wherein the safety device (40) is made from a thermoplastic polymer, such as homopolymer propylene.

10. Supply assembly of a fluid, in particular an automotive gas, comprising a coupling device (1) according to any of the previous claims, and a supply pipe having an end portion inserted and blocked in said coupling device (1), in said end portion there being an annular projection (2) engaged by flexible arms (20) of the coupling device (1), where said pipe has a diameter of 6 mm ± 0.3 mm and where said annular projection (2) has a diameter of 6.5 mm to 12 mm, preferably about 10 mm.

## Patentansprüche

1. Kopplungsvorrichtung (1) einer Leitung, umfassend einen Vorrichtungs-Körper (10), in welchem ein Loch (12) gebildet ist, welches sich von einer Endöffnung (14) des Körpers erstreckt, um eine Leitung aufzunehmen, einen Kragen (16), welcher teilweise innerhalb des Lochs mit der Möglichkeit einer axialen Verlagerung positioniert ist, und welcher einen ringförmigen Flansch (18) außerhalb der Endöffnung (14) und flexible Arme (20) aufweist, welche sich innerhalb des Lochs (12) erstrecken, wobei die Arme geeignet sind, mit einer Nockenfläche (22) zusammenzuwirken, welche in dem Vorrichtungs-Körper (10) gebildet ist, wobei die Nockenfläche einen inneren konischen Abschnitt (22') in einer axialen Richtung umfasst, welcher geeignet ist, mit den flexiblen Armen (20) einzugreifen, so dass diese von der axialen Bewegung in dieser Richtung nach innen gedrängt werden, wobei das distale Ende (24) von jedem Arm (20) an seiner Innenseite einen radialen Vorsprung (25) aufweist, welcher geeignet ist, mit einem ringförmigen Vorsprung (2) der Leitung einzugreifen, wobei die Kopplungsvorrichtung (1) ferner eine Sicherheitsvorrichtung (40) umfasst, welche eine Sicherheitsgabel (44) umfasst, welche dazu geeignet ist, den Kragen (16) zu umfassen, wobei diese sich selbst zwischen dem Vorrichtungs-Körper (10) und dem ringförmigen Flansch (18) des Kragens positioniert, um eine axiale Verschiebung des Kragens (16) in Richtung des Vorrichtungs-Körpers zu verhindern;
wobei die Kopplungsvorrichtung (1) durch eine Sicherheitsvorrichtung (40) gekennzeichnet ist, welche einen zylindrischen Abschnitt (42) umfasst, welcher geeignet ist, an den Abschnitt der Leitung angepasst zu werden, welcher die Endöffnung (14) überspannt, um sich so selbst zwischen der Leitung und dem Kragen zu positionieren, wobei die Sicherheitsgabel (44) mit dem zylindrischen Abschnitt verbunden ist.

2. Vorrichtung nach Anspruch 1, wobei der ringförmige Vorsprung (2) der Leitung an der zu der Endöffnung (14) des Vorrichtungskörpers (10) weisenden Seite eine konische Fläche (2') definiert, welche in der Lage ist, als ein Nocken zu wirken, um die flexiblen Arme (20) der axialen Verschiebung des Kragens (16) in Richtung des Vorrichtungs-Körpers (10) folgend nach außen zu drängen.

3. Vorrichtung nach Anspruch 1 oder 2, wobei der zylindrische Abschnitt (42) der Sicherheitsvorrichtung (40) einen derartigen Innendurchmesser aufweist, um eng an eine Leitung, welche einen Durchmesser von 6 mm ± 0,3 mm aufweist, angepasst zu sein.

4. Vorrichtung nach einem der vorhergehenden Ansprüche, wobei der zylindrische Abschnitt (42) der Sicherheitsvorrichtung (40) eine Mehrzahl von Längsschlitzen (46) aufweist, welche sich abwechselnd von einem Ende des zylindrischen Abschnitts in Richtung des gegenüberliegenden Endes erstrecken, um so dem zylindrischen Abschnitt (42) eine derartige Elastizität zu verleihen, um an die Leitung von dem freien Ende der Leitung angepasst zu sein, wobei er den ringförmigen Vorsprung (2) passiert.

5. Vorrichtung nach einem der Ansprüche 1 - 3, wobei der zylindrische Abschnitt (42) der Sicherheitsvorrichtung (40) einen einzelnen Längsschlitz (46') entlang seiner gesamten Länge aufweist, welcher es dem zylindrischen Abschnitt ermöglicht, elastisch aufgeweitet zu werden, um an die Leitung angepasst zu sein.

6. Vorrichtung nach einem der vorhergehenden Ansprüche, ferner umfassend, positioniert innerhalb des Lochs (12) in dem Vorrichtungs-Körper (10), um so an den Endabschnitt der Leitung angepasst zu sein, wenigstens eine ringförmige Dichtung (26) und eine Buchse (28), welche einen flanschförmigen Kopf (28') aufweist, auf welchem der ringförmige Vorsprung (2) der Leitung ruht.

7. Vorrichtung nach dem vorhergehenden Anspruch, wobei das Loch (12) in dem Vorrichtungs-Körper (10) beginnend von dem offenen Ende (14) des Körpers einen ersten Abschnitt (12a), welcher einen nur wenig größeren Durchmesser als derjenige des Kragens (16) an dem Punkt der flexiblen Arme (20) in einer Ruheposition aufweist, einen zweiten Abschnitt (12b), welcher einen Ausgangs-Aufweitungsabschnitt (12b'), welcher die Nockenfläche (22) des Vorrichtungskörpers (10) definiert, einen Zwischenabschnitt (12b"), welcher im Durchmesser im Wesentlichen zylindrisch ist, so dass das radiale Aufspreizen der flexiblen Arme (20) erlaubt wird, und einen End-Aufweitungsabschnitt (12b"') aufweist, einen dritten zylindrischen Abschnitt (12c), welcher einen derartigen Durchmesser aufweist, dass die Buchse (28) und die ringförmige Dichtung (26) aufgenommen sind, einen vierten Abschnitt (12d), welcher einen nur wenig größeren Durchmesser als derjenige der Leitung aufweist und mit einer ringförmigen Anlagefläche (12d') für das Ende der Leitung endet, und einen fünften Abschnitt (12e) umfasst, welcher einen Durchmesser aufweist, welcher im Wesentlichen gleich dem Innendurchmesser der Leitung ist.

8. Vorrichtung nach dem vorhergehenden Anspruch, wobei die Endöffnung (14) des Vorrichtungs-Körpers (10) von einer ausgestellten Fläche (14') begrenzt ist, welche als eine Führung für das Einführen der flexiblen Arme (20) des Kragens (16) in das Loch (12) des Vorrichtungs-Körpers (10) wirkt.

9. Vorrichtung nach einem der vorhergehenden Ansprüche, wobei die Sicherheitsvorrichtung (40) aus einem thermoplastischen Polymer, wie beispielsweise Homopolymer-Propylen, gebildet ist.

10. Versorgungsanordnung eines Fluids, insbesondere Fahrzeuggas, umfassend eine Kopplungsvorrichtung (1) nach einem der vorhergehenden Ansprüche, und eine Versorgungsleitung, welches einen in die Kopplungsvorrichtung (1) eingeführten und blockierten Endabschnitt aufweist, wobei sich in dem Endabschnitt ein ringförmiger Vorsprung (2) befindet, welcher mit flexiblen Armen (20) der Kopplungsvorrichtung (1) in Eingriff steht, wobei die Leitung einen Durchmesser von 6 mm ± 0,3 mm aufweist, und wobei der ringförmige Vorsprung (2) einen Durchmesser von 6,5 mm bis 12 mm, vorzugsweise etwa 10 mm, aufweist.

## Revendications

1. Dispositif de raccordement (1) d'un tuyau, comprenant un corps du dispositif (10) dans lequel un trou (12) est réalisé depuis une ouverture d'extrémité (14) dudit corps pour recevoir un tuyau, une bague (16) positionnée partiellement à l'intérieur dudit trou avec la possibilité d'une translation axiale et possédant une bride annulaire (18) à l'extérieur de ladite ouverture d'extrémité (14) et des bras flexibles (20) qui se prolongent à l'intérieur dudit trou (12), lesdits bras pouvant être solidaires d'une surface de came (22) réalisée dans le corps du dispositif (10), ladite surface de came comprenant une partie conique intérieure (22') dans une direction axiale permettant d'insérer lesdits bras flexibles (20) de telle manière qu'ils sont poussés vers l'intérieur par le mouvement axial dans ladite direction, l'extrémité distale (24) de chaque bras (20) possédant, sur la face intérieure, une protubérance radiale (25) permettant de recevoir une protubérance annulaire (2) du tuyau, le dispositif de raccordement (1) comprenant en outre un dispositif de sécurité (40) comportant une fourchette de sécurité (44) permettant d'entourer la bague (16) se positionnant entre le corps du dispositif (10) et la bride annulaire (18) de ladite bague pour empêcher le décalage axial de la bague (16) en direction du corps du dispositif,
ledit dispositif de raccordement (1) étant **caractérisé par** un dispositif de sécurité (40) comprenant une partie cylindrique (42) pouvant être adaptée sur la partie du tuyau chevauchant l'ouverture d'extrémité (14) de manière à se positionner entre le tuyau et la bague, la fourchette de sécurité (44) étant reliée à ladite partie cylindrique.

2. Dispositif selon la revendication 1, dans lequel la protubérance annulaire (2) du tuyau définit, sur le côté orienté vers l'ouverture d'extrémité (14) du corps du dispositif (10), une surface conique (2') pouvant jouer le rôle de came pour chasser les bras flexibles (20) vers l'extérieur en suivant le décalage axial de la bague (16) vers le corps du dispositif (10).

3. Dispositif selon la revendication 1 ou 2, dans lequel la partie cylindrique (42) du dispositif de sécurité (40) possède un diamètre intérieur permettant un ajustement serré sur un tuyau d'un diamètre de 6 mm ± 0,3 mm.

4. Dispositif selon une des revendications précédentes, dans lequel la partie cylindrique (42) du dispositif de sécurité (40) possède un ensemble de fentes longitudinales (46) qui, de manière alternée, vont d'une extrémité de ladite partie cylindrique vers l'extrémité opposée, de manière à conférer à ladite partie cylindrique (42) l'élasticité nécessaire pour être montée sur le tuyau depuis l'extrémité libre du tuyau, en passant par la protubérance annulaire (2).

5. Dispositif selon une des revendications 1 à 3, dans lequel la partie cylindrique (42) du dispositif de sécurité (40) possède une fente longitudinale unique (46') sur toute sa longueur qui permet à ladite partie cylindrique de s'élargir de manière élastique pour être montée sur le tuyau.

6. Dispositif selon une des revendications précédentes, comprenant en outre, positionné à l'intérieur du trou (12) dans le corps du dispositif (10) de manière à pouvoir être monté sur le tronçon d'extrémité du tuyau, au moins un joint annulaire (26) et un manchon (28) possédant une tête à épaulement (28') sur laquelle appuie la protubérance annulaire (2) du tuyau.

7. Dispositif selon la revendication précédente, dans lequel le trou (12) dans le corps du dispositif (10) comprend, en commençant depuis l'extrémité ouverte (14) dudit corps, une première partie (12a) d'un diamètre légèrement supérieur à celui de la bague (16) à l'endroit des bras flexibles (20) dans une position de repos, une deuxième partie (12b) possédant une section initiale divergente (12b') qui définit la surface de came (22) du corps du dispositif (10), une section intermédiaire (12b") d'un diamètre sensiblement cylindrique de manière à permettre le déploiement radial des bras flexibles (20) et une section finale convergente (12b"'), une troisième partie cylindrique (12c) possédant un diamètre permettant de recevoir le manchon (28) et le joint annulaire (26), une quatrième partie (12d) possédant un diamètre légèrement supérieur à celui du tuyau et se terminant par un plan de butée annulaire (12d') pour l'extrémité dudit tuyau et une cinquième partie (12e) d'un diamètre sensiblement égal au diamètre intérieur du tuyau.

8. Dispositif selon la revendication précédente, dans lequel l'ouverture d'extrémité (14) du corps du dispositif (10) est délimitée par une surface évasée (14') jouant le rôle de guide pour l'insertion des bras flexibles (20) de la bague (16) dans le trou (12) du corps du dispositif (10).

9. Dispositif selon une des revendications précédentes, dans lequel le dispositif de sécurité (40) est en polymère thermoplastique, comme un homopolymère de propylène.

10. Module d'alimentation pour un fluide, en particulier du carburant pour automobile, comprenant un dispositif de raccordement (1) selon une des revendications précédentes et un tuyau d'alimentation possédant un tronçon d'extrémité inséré et bloqué dans ledit dispositif de raccordement (1), ledit tronçon d'extrémité possédant une protubérance annulaire (2) recouverte par les bras flexibles (20) du dispositif de raccordement (1), où ledit tuyau possède un diamètre de 6 mm ± 0,3 mm et où ladite protubérance annulaire (2) possède un diamètre de 6,5 mm à 12 mm, de préférence de l'ordre de 10 mm.
